# EUROPEAN PATENT APPLICATION

(11) **EP 4 475 081 A1**
(43) Date of publication of application: **11.12.2024**
(21) Application number: 22924739.0
(22) Date of filing: 01.02.2022
(51) Int. Cl.: G06T 15/04

(54) **IMAGE PROCESSING DEVICE, IMAGE PROCESSING METHOD, AND PROGRAM**

(71) Applicant: Sony Interactive Entertainment Inc., Tokyo 108-0075 (JP)
(72) Inventor: WATANABE, Atsushi, Tokyo 108-0075 (JP); NISHIDATE, Masaomi, Tokyo 108-0075 (JP)
(74) Representative: Müller Hoffmann & Partner
(86) International application number: PCT/JP2022/003863
(87) International publication number: WO 2023/148826

(57) **Abstract**

An image processing device for acquiring, with regard to a human object located in a virtual space, map data of the surface of the human object that is used in order to determine the external appearance of a region of the human object corresponding to the skin, acquiring state information indicating the state in the virtual space, and correcting a value included in the map data on the basis of the acquired state information, and the image processing device draws a spatial image illustrating an appearance of the virtual space by using the corrected map data.

## Description

### [Technical Field]

The present invention relates to an image processing device, an image processing method, and a program that execute processing related to drawing of an image including human skin.

### [Background Art]

In the field of three-dimensional computer graphics, various efforts have been made to draw highly realistic images. As a result, in recent years it has become possible to draw images that are closer to live-action images.

### [Summary]

### [Technical Problem]

In the above-mentioned conventional technology, it is an important element to express human skin in an appearance closer to reality. However, a condition of real human skin changes due to various factors such as a surrounding environment. Therefore, simply improving image quality is not sufficient to draw human skin more realistically.

The present invention has been made in consideration of the above circumstances, and one of its objects is to provide an image processing device, an image processing method, and a program that can draw images including human skin with higher reality.

### [Solution to Problem]

An image processing device according to one aspect of the present invention includes an object data acquiring section that acquires map data of the surface of a human object placed in a virtual space, the map data being used to determine an appearance of a region corresponding to a skin of the human object, a state information acquiring section that acquires state information indicating a state in the virtual space, and a correcting section that corrects a value included in the map data on the basis of the state information, and the device is characterized in that a spatial image illustrating the appearance of the virtual space is drawn by using the corrected map data.

An image processing method according to one aspect of the present invention includes an object data acquisition step of acquiring map data of the surface of a human object, which is used to determine the appearance of a region corresponding to the skin of the human object placed in a virtual space, a state information acquisition step of acquiring state information indicating a state in the virtual space, and a correction step of correcting a value included in the map data on the basis of the state information, and the method is characterized in that a spatial image illustrating the appearance of the virtual space is drawn by using the corrected map data.

A program according to one aspect of the present invention is a program for causing a computer to execute an object data acquisition step of acquiring map data of the surface of a human object that is used to determine the appearance of a region corresponding to the skin of the human object placed in a virtual space, a state information acquisition step of acquiring state information indicating a state in the virtual space, and a correction step of correcting a value included in the map data on the basis of the state information, and the program is used for drawing a spatial image illustrating the appearance of the virtual space by using the corrected map data. This program may be stored in a computer-readable non-transitory information storage medium to be provided.

### [Brief Description of Drawings]

[FIG. 1]

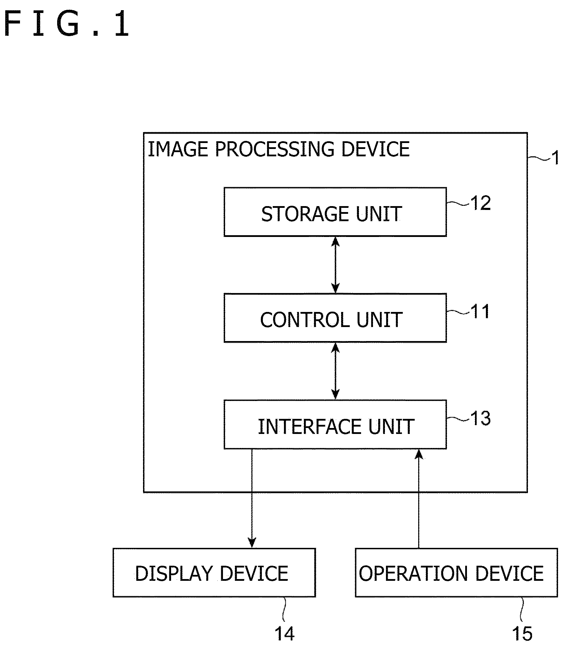

   FIG. 1 is a configuration block diagram illustrating a configuration of an image processing device according to an embodiment of the present invention.
[FIG. 2]

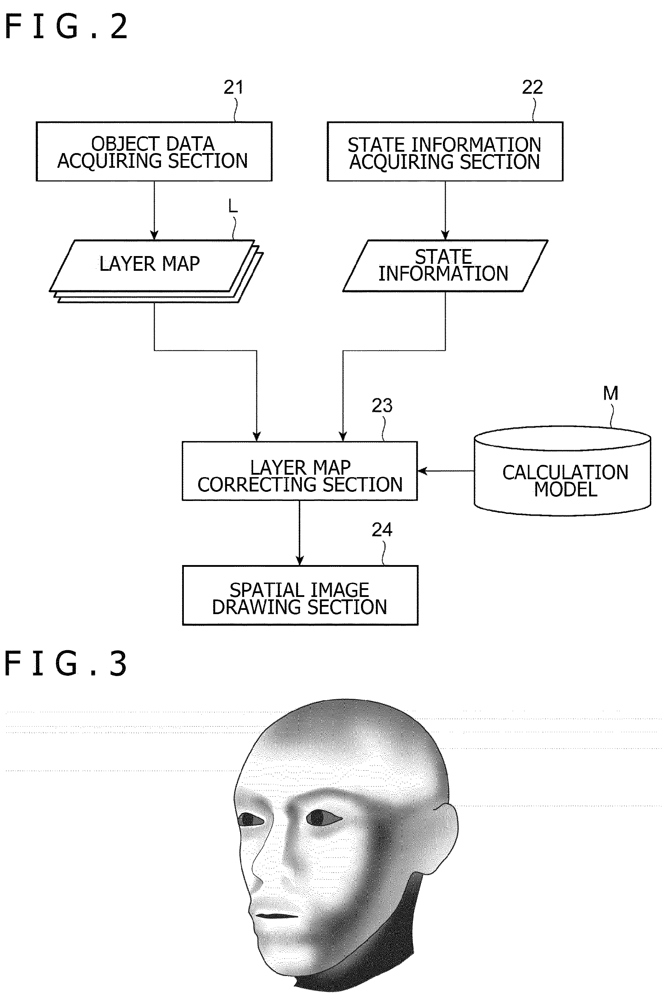

   FIG. 2 is a functional block diagram illustrating functions of the image processing device according to the embodiment of the present invention.
[FIG. 3]
   FIG. 3 is a diagram illustrating an example of a sebum secretion volume map of a human face.
[FIG. 4]

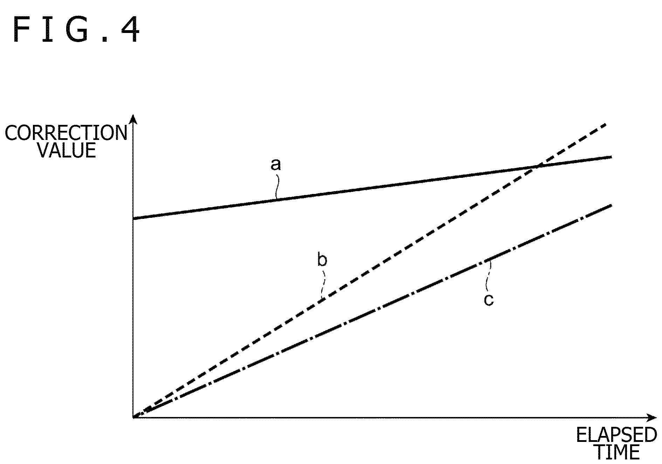

   FIG. 4 is a graph illustrating an example of changes in correction values over elapsed time.
[FIG. 5]

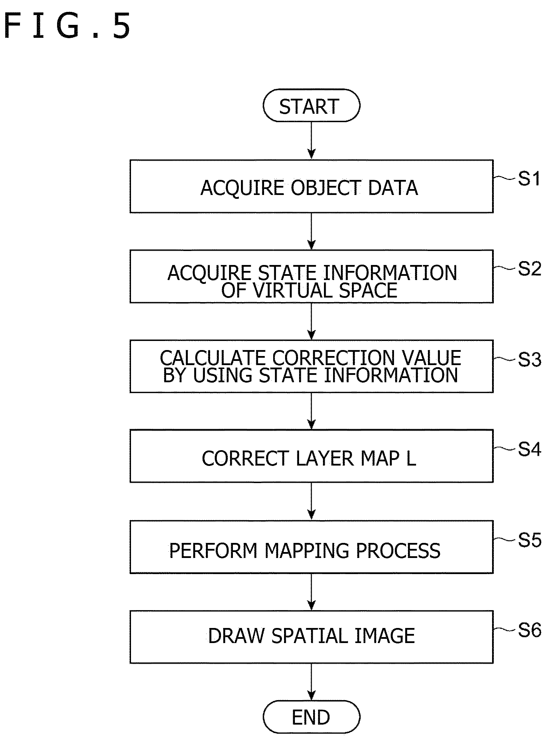

   FIG. 5 is a flow diagram illustrating an example of the flow of processing executed by the image processing device according to the embodiment of the present invention.

### [Description of Embodiments]

Hereinafter, embodiments of the present invention will be described in detail, based on the drawings.

FIG. 1 is a configuration block diagram illustrating a configuration of an image processing device 1 according to an embodiment of the present invention. The image processing device 1 is a home game machine, a portable game machine, a personal computer, a smartphone, a tablet, etc., for example, and includes a control unit 11, a storage unit 12, and an interface unit 13, as illustrated in the figure. Further, the image processing device 1 is connected to a display device 14 and an operation device 15.

The control unit 11 includes at least one processor such as a central processing unit (CPU), and executes programs stored in the storage unit 12 to perform various information processes. Note that a specific example of the processing executed by the control unit 11 in the present embodiment will be described later. The storage unit 12 includes at least one memory device such as a random access memory (RAM), and stores programs executed by the control unit 11 and data processed by the programs.

The interface unit 13 is an interface for data communication with the display device 14 and the operation device 15. The image processing device 1 is connected to the display device 14 and the operation device 15 respectively via the interface unit 13 either by wire or wirelessly. To be specific, the interface unit 13 is assumed to include a multimedia interface for transmitting video data supplied by the image processing device 1 to the display device 14. Further, the interface unit 13 also includes a data communication interface for receiving a signal indicating the contents of the operation performed by the user on the operation device 15.

The display device 14 is a liquid crystal display, an organic electroluminescence (EL) display, or the like, and displays an image according to the video signal supplied from the image processing device 1 on its screen. The display device 14 may be a head-mounted display device that presents images to each of the user's right and left eyes. The operation device 15 is a keyboard, a mouse, a controller for a home game machine, or the like, for example, and accepts operation input from the user. Incidentally, both the display device 14 and the operation device 15 may be built into the housing of the image processing device 1, or may be separate devices connected to the image processing device 1 by wire or wirelessly. The operation device 15 may include a push button or a touch panel arranged on the surface of the housing of the image processing device 1.

Hereinafter, the functions implemented by the image processing device 1 will be described by using the functional block diagram in FIG. 2. In the present embodiment, the image processing device 1 executes a process of drawing a spatial image illustrating an appearance in a virtual three-dimensional space (virtual space). As illustrated in FIG. 2, the image processing device 1 functionally includes an object data acquiring section 21, a state information acquiring section 22, a layer map correcting section 23, and a spatial image drawing section 24. These functions are achieved by the control unit 11 operating according to a program stored in the storage unit 12. This program may be provided to the image processing device 1 via a communication network such as the Internet, or may be provided while being stored in a computer-readable information storage medium such as an optical disk.

The object data acquiring section 21 acquires object data necessary for drawing a three-dimensional object placed in a virtual space. In particular, in the present embodiment, the objects to be drawn by the image processing device 1 include at least a human object representing a person. This human object may be a user object to be operated by the user of the image processing device 1. In that case, a position, an orientation, a posture, etc., of the user object in the virtual space will change depending on the contents of the user's operation input to the operation device 15.

The data for each object includes shape data that defines the rough shape of the three-dimensional model of the object, and appearance data that determines the appearance of the object surface. In particular, it is assumed that the appearance data of a human object includes data of a plurality of types of layer maps L that cover at least a region corresponding to the skin of the person. Each layer map L corresponds to a mutually overlapping region on the human object surface and is used to determine the appearance of the corresponding region. Each layer map L has a data structure similar to the data of a flat image, and one or more values (hereinafter referred to as a pixel value for convenience) are set for each of a plurality of pixels arranged along a two-dimensional coordinate system (e.g. UV coordinate system). Each pixel included in the layer map L is associated with a specific position on the surface of the human object.

To be specific, the layer map L of a human object may include a color map that represents the reference color of the surface of the human object, a height map that represents the height of the surface, a roughness map that represents the roughness of the surface, a sebum secretion volume map that indicates the degree of sebum secretion in the skin, a moisture amount map that indicates the degree of dampness and moisture of the skin, and the like. The spatial image drawing section 24, which will be described later, determines what color and texture is to be used to draw the skin on the surface of the human object by performing a mapping process in which the plurality of layer maps L are superimposed and pasted on the surface of the three-dimensional model.

FIG. 3 illustrates an example of a sebum secretion volume map of a human face. The example in this figure illustrates a situation in which the content of a sebum secretion volume map is pasted onto a three-dimensional model representing a human face, and the shade of color indicates the degree of sebum secretion. This sebum secretion volume map illustrates areas of a person's facial skin where sebum is easily secreted and where sebum is difficult to secrete. When a human object is drawn, by determining the light transmittance at the corresponding position on the face surface on the basis of the pixel value of each pixel included in this sebum secretion volume map, greasiness of the skin (shine) or the like by sebum secretion can be expressed.

The state information acquiring section 22 acquires information regarding the state in the virtual space that may affect the appearance of a person's skin. Hereinafter, the information regarding the state in the virtual space that the state information acquiring section 22 obtains will be referred to as state information. The state information may include environmental information regarding the environment in the virtual space, such as a temperature (air temperature) and humidity in the space set for the virtual space. Further, information regarding the state of the human object itself to be drawn may be included. A specific example of the state information will be described later. Note that the state information may be information representing a state that changes over time in the virtual space. In that case, the state information acquiring section 22 periodically acquires information representing the current state.

The layer map correcting section 23 corrects each layer map L of the human object acquired by the object data acquiring section 21, by using the state information acquired by the state information acquiring section 22. For example, in a case where the temperature in the virtual space is high, it is conceivable that the volume of sweat and sebum secreted by a person will increase, and the effects of sweat and sebum will be greater than the values defined in the sebum secretion map and the moisture map prepared in advance. Therefore, the layer map correcting section 23 corrects the pixel value of each pixel included in the layer map L for determining the appearance of the human object, so as to reflect the influence of the environment in the virtual space and the condition of the person indicated by the state information. This makes it possible to express a skin condition that has changed from the contents of the layer map L prepared in advance due to the influence of the environment in the virtual space or the condition of the person.

To be specific, the layer map correcting section 23 calculates a correction value by using a calculation model M prepared in advance. This calculation model M is a model that defines a function that uses the value of the state information acquired by the state information acquiring section 22 as input and outputs a correction value to be applied to the corresponding layer map L. The calculation model M may be a simple computation expression such as a linear function, or may be a more complex function. Furthermore, as will be described later, the calculation model M may be a computing unit generated by machine learning.

The calculation model M is prepared for each layer map L to be applied. For example, in the case of performing correction on three types of layer maps L, individual calculation models M are prepared for these three types of layer maps L, respectively. By inputting the same value of the state information into these three types of layer maps L, three correction values can be obtained. It should be noted that it is not necessarily needed to correct all the layer maps L to be used for drawing a spatial image on the basis of a certain type of state information, and a correction value is assumed to be calculated for some or all of the layer maps L determined in advance, depending on the type of the state information.

After calculating the correction value, the layer map correcting section 23 corrects the pixel value of each pixel included in the corresponding layer map L by using the calculated correction value. For example, the layer map correcting section 23 corrects the pixel value by multiplying the pixel value of each pixel by a correction value. Alternatively, the correction value may be added to the pixel value of each pixel, or the pixel value may be changed by using a more complicated computation expression. Furthermore, in a case where the pixel value exceeds a predetermined numerical range of the pixel value due to correction, correction may be performed such as converting the corrected numerical value into an upper limit value or a lower limit value such that the corrected numerical value is included in the pixel value numerical range.

Note that the calculation model M may accept values of a plurality of types of state information as input. For example, in a case where it is required to perform a correction that takes into account the effects of both temperature and humidity in the virtual space, the calculation model M calculates one correction value to be applied to the corresponding layer map L, with the values of these two types of environmental information as the input. The calculation model M in this case becomes a function with two variables as the input. Alternatively, a different calculation model M may be prepared for each type of state information. In this case, correction values for the layer map L are calculated independently according to each state information. Thereafter, the layer map correcting section 23 duplicately applies a plurality of correction values calculated according to the plurality of types of state information to pixel values in the corresponding layer map L, thereby performing correction of the layer map L corresponding to the plurality of types of state information.

Further, the correction value calculated by the calculation model M may be a value that is applied only to a specific type of pixel value among the pixel values included in the target layer map L. For example, in a case where it is assumed that redness of the skin increases under a specific environment, a correction value may be calculated that increases the red pixel value among the RGB pixel values included in the color map.

The spatial image drawing section 24 uses the object data acquired by the object data acquiring section 21 to draw a two-dimensional spatial image illustrating the appearance of the virtual space. At this time, the spatial image drawing section 24 overlaps the plurality of layer maps L on each other that have been corrected by the layer map correcting section 23, and performs mapping processing for the human object. Then, a spatial image is drawn that illustrates the appearance of the virtual space including the human object onto which the mapping of the layer map L is performed, as viewed from a given viewpoint. Note that the mapping process using the corrected layer map L and the spatial image drawing process themselves may be implemented by known methods. The image processing device 1 may display the drawn spatial image on the screen of the display device 14, or may distribute the image to other devices via a communication network. Alternatively, the image may be stored in a storage device such as a hard disk drive.

A specific example of the process of correcting the layer map L by using state information will be described below.

As an example, the state information acquiring section 22 acquires a temperature value of the virtual space as part of the environmental information. The layer map correcting section 23 calculates a correction value for the sebum secretion volume map by inputting the obtained temperature value into a computation expression prepared in advance. Then, by multiplying the pixel value (value indicating the degree of sebum secretion) of each pixel in the sebum secretion volume map to be corrected by the calculated value of the correction value, correction is performed according to the temperature in the virtual space. The spatial image drawing section 24 draws the appearance of the human object by combining the corrected sebum secretion volume map with another layer map L to perform the mapping process. As a result, the appearance indicating that more sebum is secreted and the skin becomes shiny in a high-temperature environment can be expressed.

Furthermore, the influence of the environment on the skin do not appear immediately but generally appear over time. Therefore, the correction value for each layer map L is desirably determined not only according to the value of state information itself such as temperature, but also according to the length of time for which the state continues. Therefore, the state information acquiring section 22 may acquire, as one piece of the state information, information indicating the elapsed time since the start of a specific state, and the layer map correcting section 23 may use this time information to calculate a correction value.

FIG. 4 is a graph illustrating an example of changes in correction values over elapsed time. The graph in this figure illustrates an example of a correction value in a case where a certain temperature value continues. In the example of this graph, the calculation model M for calculating the correction values is defined as a linear function of elapsed time. Also, in this graph, three correction values, which are a correction value for the height map (a in the figure), a correction value for the roughness map (b in the figure), and a correction value for the sebum secretion volume map (c in the figure), are calculated by using different calculation models M from each other. This graph illustrates that the influence on the roughness map and the sebum secretion volume map particularly becomes larger as time passes. It should be noted that this graph illustrates a graph in a case where time passes under a specific temperature environment, and in a different temperature environment, the correction value may be calculated by using a different linear function with different intercept and slope values, for example.

For example, in a game, the time required to clear the same scene may vary from user to user. According to the image processing device 1 according to the present embodiment, the skin condition can be changed according to the elapsed time, so that a situation can be demonstrated in which a user who can clear a specific scene in a short time is less affected by the environment of that scene, but in the case of the user taking some time, the human object gradually sweat under the influence of the environment. Note that the layer map correcting section 23 may perform correction by using only the elapsed time during which a specific scene continues as state information, regardless of the air temperature or the like. This makes it possible to express changes in the skin due to effects such as fatigue while a specific scene continues.

The influence of the temperature in the virtual space may also appear in layer maps L of types other than the layer map L illustrated in FIG. 4. For example, in a case where the temperature is high, sweat is also secreted, which increases the amount of moisture on the surface of the human object where perspiration is likely to occur. Furthermore, in an environment where the temperature is lower than normal, such as in a snowy mountain, changes in properties that are different from those in high temperatures occur, such as skin becoming red. Therefore, the layer map L representing the position and degree of redness that occurs on the skin is prepared separately, and in a case where the temperature is low, a correction value for this layer map L may be calculated by using another calculation model M.

Further, the layer map correcting section 23 may correct the layer map L on the basis of various types of environmental information set for the virtual space, such as humidity, in addition to the air temperature. Further, the correction value for the layer map L to be mapped onto the human object may be determined based not only on the environmental information indicating the environment of the entire virtual space but also on the state information indicating the state of the target human object. For example, in a case where a person in a virtual space is drunk or sunburned, changes such as redness will appear on the person's skin. Changes in the skin in this case are not always constant, and the degree of change is thought to vary depending on the degree of drunkenness or sunburn. Therefore, the image processing device 1 acquires information indicating the degree of drunkenness and sunburn as one piece of the state information, and may calculate a correction value for the layer map L that defines skin changes caused by drunkenness and sunburn on the basis of the value of the obtained information.

In addition, one of the changes that occur on the skin of a human object can be considered to be a mark caused by a blow or the like. Although the position where such a mark occurs is not fixed, the content of the change itself may be defined by the layer map L. In this case as well, the image processing device 1 may acquire state information indicating the strongness of the blow, etc., received by the person, and calculate a correction value for the layer map L that defines the marks of the blow, etc., on the basis of the value thereof. As a result, in a case where a person receives a strong blow, a clearer (darker) mark is made to appear on the skin.

An example of a method for determining the calculation model M to be used to calculate the correction value will be described below. In the above example, a simple linear function of elapsed time is used as the calculation model M to calculate the correction value, but the effects of actual temperature, humidity, etc., on the skin condition may appear in more complex ways. Therefore, in the present embodiment, the correction value may be calculated by using the calculation model M generated by machine learning or the like.

In the present example, images of the skin condition changes of a real person over time are captured under various environments. For example, images of the face of a certain person are captured in a specific temperature environment every time a certain period of time elapses on the basis of the time when the person is first placed in that environment. Furthermore, even in different temperature environments, images of the same person's face are similarly captured at regular intervals. By collecting a large number of pieces of such sample data, what kinds of changes appear in a person's face due to temperature and the passage of time can be analyzed. Note that this image capturing is not limited to capturing an optical planar image, and may include image capturing from various viewpoints, such as capturing a three-dimensional image or capturing a temperature distribution image by using a thermal camera.

The image processing device 1 analyzes images taken under various conditions as described above, and generates a plurality of types of layer maps representing human faces. To be specific, in a case where the obtained captured image is a planar image, the three-dimensional shape of the face is identified by analyzing its contents, and converted into a map image using a UV coordinate system or the like. Furthermore, by analyzing the color distribution and the temperature distribution included in the map image, layer maps that can reproduce the face whose image has been captured, such as color maps, height maps, and sebum secretion volume maps, are generated.

After that, the image processing device 1 performs machine learning by using, as training data, the generated layer map and state information indicating the state (here, temperature and elapsed time) when the image used to generate the layer map is captured. This makes it possible to generate the calculation model M for outputting a correction value that indicates the degree of change that appears on a person's face due to differences in temperature and the passage of time.

Note that the image processing device 1 may determine the correction value calculation model M for each part of the human body by similarly performing such analysis not only on the face but also on other parts such as hands and feet. Alternatively, the correction value calculation model M obtained as a result of analysis of a specific part may be used to determine the correction value for another part. As described above, the layer map L separately defines where and how much sebum secretion, sweat, etc., appear on a person's skin. Assuming that the influence of the environment itself appears in a similar manner to the entire human skin, the correction value calculation model M itself to be applied to the layer map L may be used in common for the skin of the entire body.

Furthermore, there are individual differences in changes in the condition that appear on a person's skin. To be specific, the ease of sweating, volume of sebum secretion, and ease of sunburning tend to vary depending on a person's attributes such as age, gender, and race. Furthermore, even if people have the same attributes, it is conceivable that there may be differences due to individual characteristics, such as those who sweat easily and those who sweat less. Therefore, individual calculation models M may be prepared in advance according to the attributes and characteristics of the target person, and the calculation model M to be applied may be selected for each human object to be drawn.

As a specific example, the image processing device 1 performs the above-described machine learning on each person having different attributes, and generates the calculation model M independently of each other. That is, training data is generated by capturing images of a plurality of people belonging to each attribute as samples, such as men in their 20s and women in their 30s. By performing machine learning using the training data obtained in this manner as input, the calculation model M that reflects the skin condition of a person belonging to each attribute can be generated.

Furthermore, regarding the characteristics of people such as those who sweat easily and those who do not sweat easily, machine learning may be performed independently by using samples of people with the respective characteristics, and the calculation models M may be generated individually. Alternatively, correction values for people with different characteristics may be calculated by amendment such as correction of the output value of the calculation model M obtained by performing machine learning on people with various characteristics.

In a case where it is desired to perform different corrections depending on the attributes and characteristics of a person, the state information acquiring section 22 acquires information specifying the attributes and/or characteristics of the person for the target human object together with the state information. Then, the layer map correcting section 23 selects the calculation model M to be used from among the plurality of calculation models M prepared in advance, according to the specified attributes and/or characteristics, and inputs the values of state information (for example, temperature, elapsed time, etc.) into the selected calculation model M. Thereby, a correction value that reflects the person's attributes and characteristics can be calculated. It should be noted that, in a case where a plurality of human objects exist in the virtual space, information regarding attributes and characteristics is acquired for each person, and a correction value for the layer map L is calculated for each person. This makes it possible to cause different changes in the skin of different people even under the same environment.

It is to be noted that in the above description, the image processing device 1 itself performs machine learning to generate the calculation model M, but the machine learning itself may be performed by another information processing device. In this case, the image processing device 1 stores the data of the calculation model M generated by another information processing device, and uses the data as necessary when drawing a spatial image.

Hereinafter, an example of the flow of processing that the image processing device 1 according to the present embodiment executes when drawing a moving image will be described by using the flowchart of FIG. 5.

First, the object data acquiring section 21 acquires object data such as shape data, appearance data, and information specifying position and orientation in the virtual space, for each of a plurality of objects existing in the virtual space (S1). After that, the state information acquiring section 22 acquires state information of the virtual space at the time when the object becomes a drawing target (S2).

Next, the layer map correcting section 23 calculates a correction value by inputting the state information acquired in S2 into the corresponding calculation model M for each of the layer maps L to be corrected (S3). Then, the plurality of layer maps L included in the appearance data specified in S1 are corrected by using the calculated correction values (S4).

After that, the spatial image drawing section 24 performs mapping of the plurality of layer maps L corrected in S4 onto a three-dimensional model defined by the shape data acquired in Sl, and determines the appearance of the human object (S5). Then, a spatial image illustrating the appearance of this virtual space is drawn and written into a frame buffer memory in the storage unit 12 (S6). The spatial image written into the frame buffer memory is displayed on the screen of the display device 14 as a frame image.

The image processing device 1 can generate a moving image illustrating temporal changes in the virtual space and display the image on the screen of the display device 14 by repeatedly executing the processing described above at a predetermined frame rate.

Note that the processing described above may be implemented by a game engine, for example, and the game engine may also provide the calculation model M for calculating the correction value according to the state information. In this case, the game application program specifies the shape data and the appearance data of the object to be drawn and the state information of the virtual space in each frame for the game engine. In this way, the game application itself does not have to consider how the temperature, the humidity, and the like of the virtual space will affect the appearance of the person, and by simply specifying temperature and humidity information to the game engine, the game player can be presented with a person's appearance that reflects the environment.

Further, the calculation model M may be provided by a game application program. In this case, the game engine calculates a correction value by using the specified calculation model M and performs correction on the layer map L specified by the game. In this way, how the appearance of a person's skin changes in a manner that matches the contents of the game can be presented for the player.

Furthermore, at least some of the functions described above may be executed by the application program itself. For example, the application program may itself calculate a correction value according to the state in the virtual space, the attributes of the person to be drawn, or the like, and specify the value for the game engine together with the layer map L or the like to be used. In this case, the game engine corrects the layer map L by using the specified correction value, and draws the spatial image by using the corrected layer map L.

Further, the spatial image drawn by the image processing device 1 according to the embodiment of the present invention is not limited to a game image that changes in real time. For example, also in the case of generating pre-rendered video whose contents do not change in response to user operations, by specifying the state information in advance that indicates the state of the virtual space for each scene or elapsed time, images in which the appearance of a person's skin changes depending on the situation can be generated with relatively little effort.

As described above, according to the image processing device 1 according to the present embodiment, spatial images in which the appearance of human skin in the virtual space can be expressed with higher reality can be drawn by using the layer map L corrected by taking into account the state in the virtual space. In addition, by correcting the layer map L by using dynamically calculated correction values, there is no need to prepare a large number of layer maps L in advance to express various situations, and it becomes possible to express various states of skin with relative ease.

It should be noted that the embodiments of the present invention are not limited to those described above. For example, in the above description, the state information that the state information acquiring section 22 acquires is merely an example, and in addition to this, various types of state information that can affect the condition of a person's skin may be acquired. Further, the layer map L to be corrected according to the state information is not limited to the one illustrated above, and may be of various types used to determine the appearance of human skin.

### [Reference Signs List]

- 1:: Image processing device
- 11:: Control unit
- 12:: Storage unit
- 13:: Interface unit
- 14:: Display device
- 15:: Operation device
- 21:: Object data acquiring section
- 22:: State information acquiring section
- 23:: Layer map correcting section
- 24:: Spatial image drawing section

## Claims

1. An image processing device comprising:
an object data acquiring section that acquires map data of a surface of a human object placed in a virtual space, the map data being used to determine an appearance of a region corresponding to a skin of the human object;
a state information acquiring section that acquires state information indicating a state in the virtual space; and
a correcting section that corrects a value included in the map data, on a basis of the state information, wherein
a spatial image illustrating an appearance of the virtual space is drawn by using the corrected map data.

2. The image processing device according to claim 1, wherein
the object data acquiring section acquires a plurality of types of map data, and
the correcting section calculates a correction value different for each of the plurality of types of map data, and uses the calculated correction value to correct a value included in corresponding map data.

3. The image processing device according to claim 1 or 2, wherein
the state information includes environmental information indicating an environment of the virtual space.

4. The image processing device according to claim 3, wherein
the environmental information includes either a temperature or
a humidity in the virtual space.

5. The image processing device according to any one of claims 1 to 4, wherein
the state information includes information indicating a state of the human object itself.

6. The image processing device according to any one of claims 1 to 5, wherein
the state information includes elapsed time information indicating how long the state lasts.

7. The image processing device according to any one of claims 1 to 6, wherein
the state information acquiring section acquires information specifying an attribute and/or a characteristic of the human object together with the state information, and
the correcting section performs correction of contents that differ depending on the specified attribute and/or characteristic.

8. The image processing device according to any one of claims 1 to 7, wherein
the correcting section calculates a correction value according to the state information by using a calculation model prepared in advance, and corrects the value included in the map data by using the calculated correction value.

9. The image processing device according to claim 8, wherein
the calculation model is generated by machine learning using map data obtained by capturing an image of a real person as training data.

10. An image processing method comprising:
an object data acquisition step of acquiring map data of a surface of a human object that is used to determine an appearance of a region corresponding to a skin of the human object placed in a virtual space;
a state information acquisition step of acquiring state information indicating a state in the virtual space; and
a correction step of correcting a value included in the map data, on a basis of the state information, wherein
a spatial image illustrating an appearance of the virtual space is drawn by using the corrected map data.

11. A program for causing a computer to execute:
an object data acquisition step of acquiring map data of a surface of a human object that is used to determine an appearance of a region corresponding to a skin of the human object placed in a virtual space;
a state information acquisition step of acquiring state information indicating a state in the virtual space; and
a correction step of correcting a value included in the map data, on a basis of the state information, wherein
a spatial image illustrating an appearance of the virtual space is drawn by using the corrected map data.
